# EUROPEAN PATENT APPLICATION

(11) **EP 4 123 532 A1**
(43) Date of publication of application: **25.01.2023**
(21) Application number: 21186703.1
(22) Date of filing: 20.07.2021
(51) Int. Cl.: G06Q 10/10, G06Q 10/06

(54) **METHOD AND APPARATUS FOR ALIGNING INTERACTIONS OF USERS IN A GREEN TECHNOLOGY PROJECT**

(71) Applicant: Hitachi, Ltd., Tokyo 100-8280 (JP)
(72) Inventor: TAMAYO RUIZ, Efrain Eduardo, London, EC2Y 5AJ (GB); BRYDEN, Thomas, London, EC2Y 5AJ (GB); PROCTOR, Brittany, London, EC2Y 5AJ (GB)
(74) Representative: MERH-IP Matias Erny Reichl Hoffmann Patentanwälte PartG mbB

(57) **Abstract**

The present disclosure relates to, in particular, a computer system for controlling exchange of data between different users sharing data of a green technology project on a digital platform. The computer system may include a platform device, which may store profiles of the users in a platform structure. The platform structure may include different layers to which the user profiles may be assigned depending on a type of a user. The platform device may be configured to receive project data, project criteria and basic criteria of a user having a user profile assigned to a first layer from a first terminal device, transmit the received project criteria to a plurality of terminal devices, receive, from a second terminal device, a request of another user to access the project data and permit said user to access the project data if a set of project criteria and basic criteria of said user match with a set of project criteria and basic criteria of the user assigned to the first layer.

## Description

The present disclosure relates to a computer system and a method, e.g., for controlling data exchange between different users of green technology projects that share data on a digital platform.

### Background

As part of the necessary actions to achieve the climate change prevention pledges made by public and private organisations, diverse actors need to align the criteria and the actions to support projects that contribute to the transition to sustainability. Some of the key actors of such green technology projects are investors, lenders, external reviewers, project owners, issuers of financial instruments such as green bonds, technology providers, etc. In each step in the process from project creation to delivery, each of the related diverse actors has own criteria, e.g., about a suitable matching to agree on accepting the project, to provide services, to provide financing and to accept the reported information about the projects. Overall, there is a need to align the criteria regarding the individual project steps between the actors and to ensure a targeted information provision.

There are technologies that provide matching of financial instruments such as loans based on lending criteria such as for the stages of drug development, as explained in US 2013/0124266 A1. However, there is a need for a technical solution that controls the access to project information based on the matching of criteria between interacting parties of a green technology project. In particular, a green technology project shall refer to a project that provides types of energy that are sustainable and more environmentally friendly than fossil fuel-based technologies or consumer technologies that have low energy efficiency.

### Problem and Solution

It is an object of the herein described disclosure to provide a computer system and a method that enables users in a project to access information in an automated manner. The computer system and the method shall preferably help to improve the interaction between users of different types and provide a targeted and secure data exchange between these users. The object is solved by the appended claims.

The following aspects are provided in particular:
A computer system for controlling the exchange of data between different users of a project sharing data on a digital platform. The computer system may comprise a plurality of terminal devices connected to at least one system server, wherein the terminal devices may be configured to receive input data from a user of the terminal device and to display output data to the user. In this context, the term "to display output data to the user" may include "to present output data to a user on a screen" but may also include "to provide/transmit output data to a user via any suitable interface". The terminal devices may be software-based and/or hardware-based communication interfaces or the like. For example, the terminal devices may be mobile devices, such as smartphones or tablet computers, or any other type of computer device connectable to the system server. The terminal devices may be connected to the system server by wire or wireless via a network.

The system server may include a plurality of databases which may comprise at least one project database, at least one project criteria database and at least one basic criteria database. The term basic criteria" is preferably to be understood as "criteria from the project demand side" and the term "project criteria" is preferably to be understood as "criteria from the project supply side". The project criteria database and the basic criteria database may be accessible by all users of the digital platform, but access of the project database may be restricted.

The project database may be configured to store project data of a plurality of projects. The projects may preferably be green technology projects contributing to the transition to sustainability. The key types of green technology projects may be
- Green by Nature including, e.g., solar, wind and biomass,
- Contributes to Green including, e.g., buildings, low emission cars, and
- Enabling Green including, e.g., transmission and distribution grids and smart city solutions.

In other words, green technology projects may comprise, for example, technologies related to renewable energy, energy efficiency, clean transportation, sustainable water management, pollution prevention, climate change adaption, conservation of biodiversity, resource conservation and recycling, eco-friendly products and production and sustainable management of living natural resources.

Project data of such a green technology project may comprise, for example, performance parameters for evaluating the project's impact to sustainability as well as administrative data related to the project such as details about a project owner or the like.

The project criteria database may be configured to store project criteria of a plurality of users, and the basic criteria database may be configured to store basic criteria of the plurality of users. Project criteria may include requirements of a user directed to a project, and basic criteria may include requirements of a project directed to a user. A detailed description of the requirements included in the project and basic criteria is given below.

Further, the system server may include a platform device connected to the plurality of databases, which may store profiles of users in a platform structure. The platform structure may include different layers which may be arranged in hierarchical order from a top layer to a bottom layer, wherein the user profiles may be assigned to the different layers depending on a type of a user. The different layers may also be arranged in an order according to the supply or demand order in the value chain or pipeline from project generation to financing and implementation. The different types of users involved in a project can be roughly divided into two groups, namely users supporting the project and users responsible for the project. Project supporters can be investors, lenders, external evaluators, issuers of financial instruments such as green bonds and technology providers, wherein the responsibility for a project lies with the project owner.

Each user profile stored in the platform structure may be connected to the project criteria database and the basic criteria database and may both transmit project/base criteria to these databases and receive data project/base criteria from these databases.

User profiles representing the project may comprise information about the project itself as well as information about the project owner responsible for the project and may be assigned to a first layer of the platform structure. The first layer may be, for example, the bottom layer of the platform structure. Any other layer may also be possible for assigning the user profiles representing the project.

The platform device may be configured to receive project data, project criteria and basic criteria of a user having a user profile assigned to the first layer from a first terminal device and may transmit the received project criteria to the plurality of terminal devices. In other words, if, e.g., a project owner adds a new project to the platform device or updates data of an existing project, the project criteria may be transmitted to all platform users via the terminal devices. The project criteria may comprise a high-level overview of the project including general information such as type and location as well as further information that may be required from users wanting to the support the project such as information about the expected or already achieved contribution in the transition to sustainability. It may also possible that a project supporter adds new project

In response to the transmitted project criteria, the project device may be configured to receive from a second terminal device a request of a user having a user profile assigned to a second layer of the platform structure to access the project data, wherein the request may include at least one set of project criteria and at least one set of basic criteria of the user. A second layer of the platform structure may be any layer different from the first layer. The second layer(s) may preferably be assigned to project supporters. For example, a user wanting to support the project may send a request for additional information to the platform device via his terminal device after receiving the project criteria. The request may further include information about the requesting user's expectations of and possible contributions to the project in the form of the at least one set of project and basic criteria.

The platform device may be configured to compare the received sets of basic criteria and project criteria of the user assigned to the second layer with the project criteria and the basic criteria of the user assigned to the first layer, and permit the user assigned to the second layer to access the project data if the set of project criteria and the set of basic criteria of the user assigned to the second layer match with a set of project criteria and a set of basic criteria of the user assigned to the first layer. In other words, the platform device may be configured to compare, e.g., the sets of project and basic criteria of a potential project supporter with the respective sets of project and basic criteria of the project owner and may provide access to the project data if there is a match between the criteria sets of both users. The above results in access and visibility of project data when there is matching between users in project and basic criteria. The defined features allow for a standardised approach on the digital platform lowering the cost and reducing the time to provide information.

In another aspect, a set of project criteria may include a first predetermined number of user requirements directed to a project, and a set of basic criteria may include a first predetermined number of project requirements directed to a user.

In other words, the set of project criteria may include a predetermined number of criteria regarding the project that a project supporter needs to decide whether a respective project meets his expectations. The project criteria may be addressed not only to the project owner but also to other users involved in a particular project. The predetermined number and the content of user requirements included in a set of project criteria may vary depending on the type of project supporter interested/involved in the project. For example, an investor or lender may require the use of proceeds by the project owner, the contents of the report from the external reviewer, the reported information from the project owner about the achieved contribution in the transition to sustainability and the economic benefit in terms of interest rate and rate of return. An external reviewer may expect, for example, the information provided by the project owner to carry out the external review and the service fees. For example, the predetermined number of user requirements included in a set of project criteria of an investor or lender (first predetermined number of user requirements) may be higher than the predetermined number of user requirements of an external reviewer.

On the other hand, the set of basic criteria may include a predetermined number of criteria regarding the project supporters that a project owner needs to decide whether a respective project supporter meets the requirements of the project. The predetermined number and the content of project requirements included in a set of basic criteria may vary depending on the type of project supporter addressed by the set of basic criteria. Project requirements that a project owner may expect from an investor or lender may be, for example, remuneration to the investor or lender and the required data by the investor or lender. Project requirements that a project owner may have for an external reviewer may include fees, time and required data. An important requirement for a project developer or service provider may be, for example, their experience from other similar projects. For example, the project owner's predetermined number of project requirements included in a set of basic criteria for an investor or lender (first predetermined number of project requirements) may be higher than the predetermined number of project requirements for an external reviewer.

In another aspect, each time a request to access the project data of a user having a user profile assigned to a second layer is received by the platform device, the platform device of the computer system may be configured to store project criteria included in the request in the project criteria database and basic criteria included in the request in the basic criteria database. This allows the aggregation of project and basic criteria in the respective database each time a user assigned to a second layer requests access the project database. The aggregation of project criteria may be helpful for the users assigned to the first layer to have a full understanding of the actions needed to fulfil the expectation of the users assigned to second layers. On the other hand, the aggregation of basic criteria may be helpful for users assigned to a second layer to have a full understanding of the expectations of users assigned to the first layer.

According to a further aspect, the platform device of the computer system may be configured to compare a set of project criteria of a user assigned to the top layer of the platform structure with sets of project criteria of users assigned to one or more subsequent lower layers. For example, investors or lenders may be assigned to the top layer of the platform structure, project owners may be assigned to the bottom layer of the platform structure and further project supporters, such as external reviewers and project developer may be assigned to the layers in between. For example, an investor may be interested to support a green technology project and may have one or more specific project criteria set(s) in which his user requirements on the different users involved in the green technology project are defined. By comparing the project criteria set of the investor with project criteria of users assigned to one or more subsequent layers, for example, green bond issuers or external reviewers, a further actor contributing to the green technology project which matches the project criteria of the investor may be found.

If a match is found between the set of project criteria of the user assigned to the top layer and a set of project criteria of a user assigned to the one or more subsequent lower layers, the platform device may be configured to compare the set of project criteria of the user assigned to the one or more subsequent lower layers with sets of user criteria of users assigned to one or more further subsequent lower layers until the bottom layer is reached. In other words, after the first match, for example, between an investor and a green bond issuer, the platform device is configured to compare the project criteria of the green bond issuer with project criteria of users assigned to further subsequent lower layers. The platform device may be configured to proceed this process until the bottom layer is reached and a project owner fulfilling the user requirements of all previously matching users is found. However, this process may so far only align the project criteria of the respective users, namely the user requirements of each user in relation to the project.

Thus, the platform device may be configured to compare a set of basic criteria of a user assigned to the bottom layer with sets of basic criteria of users assigned to one or more subsequent upper layers. If a match is found between the set of basic criteria of the user assigned to the bottom layer and a set of basic criteria of a user assigned to the one or more subsequent upper layers, the platform device may be configured to compare the set of basic criteria of the user assigned to the one or more subsequent upper layers with sets of basic criteria of users assigned to one or more further subsequent upper layers until the top layer is reached.

In other words, the platform device may be configured to carry out a further matching process with regard to the basic criteria between users assigned to different layers of the platform structure, In this case, the platform device may be configured to start at the bottom layer, e.g., by comparing, the one or more set(s) of basic criteria of the project owner, which may include project requirements directed to the different project supporters, with project criteria of users assigned to one or more subsequent layers. Again, the platform device may be configured to proceed the comparison until the top layer is reached and, e.g., an investor fulfilling the basic requirements of all previously matching users is found.

If users matching the project criteria are equal to users matching the basic criteria, the platform device may be configured to permit access to the project data for said users. In this case, the users who match with regard to the project criteria also match with regard to the basic criteria, i.e., all actors from the project owner to the investor share the same criteria. As a result, the project data can be accessed for all of these users. The features described above result in access and visibility of project information when there is matching across users from the top layer to the bottom layer in project and basic criteria. This emerges a mutual alignment achieving clarity and transparency, which results in lower cost of capital. The likelihood of mutual alignment may depend on the correspondence of expectations. In case, there is no mutual alignment based on understanding of project and basic criteria, users can take actions to fulfil missing requirements and reach alignment.

According to another aspect, the platform device of the computer system may be configured to determine a match of two sets of project criteria if a second predetermined number of user requirements of both sets are equal, wherein the second predetermined number of user requirements is less or equal to the first predetermined number of user requirements. Preferably the second predetermined number of user requirements may be in a range between 50% to 100% of the first predetermined number of user requirements. For example, if a set of project criteria includes ten user requirements, five to ten requirements should be equal to determine a match.

In another aspect, the platform device of the computer system may be configured to determine a match of two sets of basic criteria if a second predetermined number of project requirements of both sets are equal, wherein the second predetermined number of project requirements is less or equal to the first predetermined number of project requirements. Preferably the second predetermined number of project requirements may be in a range between 50% to 100% of the first predetermined number of project requirements. For example, if a set of project criteria includes ten project requirements, five to ten requirements should be equal to determine a match.

This means that a match between two sets of project and/or base criteria may be determined by the platform device if the contents of a second predetermined number of user and/or project requirements are identical. Since the second predetermined number of project/user requirements may be less than or equal to the total number of project/user requirements in a criteria set, a predetermined discrepancy between two criteria sets may be acceptable.

In another aspect, the platform device of the computer system may be configured to determine a match between two sets of project criteria if a value of a third predetermined number of the user requirements included in the two sets of project criteria corresponds in a predetermined range. This means that the content of a third predetermined number of user requirements may vary in a predetermined range. The third predetermined number of user requirements may preferably be in a range between the second predetermined number of user requirements and the first predetermined number of user requirements.

In another aspect, the platform device of the computer system may be configured to determine a match between two sets of basic criteria if a value of a third predetermined number of the project requirements included in the two sets of project criteria corresponds in a predetermined range. This means that the content of a third predetermined number of project requirements may vary in a predetermined range. The third predetermined number of project requirements may preferably be in a range between the second predetermined number of user requirements and the first predetermined number of user requirements.

According to a further aspect, the platform device of the computer system may be configured to store a plurality of sets of project criteria of each user in the project criteria database and a plurality of sets of basic criteria of each user in the basic criteria database. Furthermore, the platform device may be configured to arrange the sets of project criteria and basic criteria in the respective database in different layers depending on the type of the user in hierarchical order from a top layer to a bottom layer according to the platform structure.

According to a further aspect, the platform device of the computer system may be configured to store a plurality of sets of project data of each project in the project database and arrange the sets of project data in the project database in different layers according to the type of users requesting access to the project data in hierarchical order from a top layer to a bottom layer according to the platform structure.

By designing the project and basic criteria database as well as the project database according to the platform structure efficient access to the relevant data is achieved.

In another aspect, the platform device of the computer system may be configured to transmit at least one predetermined set of project data to a terminal device of a user when access to the project data is permitted, wherein the predetermined set of project data corresponds to the type of the user. In other words, only project data relevant for a respective user may be transmitted to the terminal device. This enables an efficient data management and improved data security.

In another aspect, the platform device of the computer system may be configured to transmit an updated set of project data to the terminal device of the user when updated data corresponding to the predetermined set of project data has entered to the project database. In other words, when project data relevant for a respective user has been updated, the updated information is transmitted to the user. In this way, every user of the platform device always has the current data relevant to him.

In another aspect of the computer system the system server and the plurality of terminal devices may be connected via a network to a blockchain network, wherein the data transmission between the system server and the terminal devices via the network to the blockchain network may be encrypted. In other words, the computer system may include the blockchain network or it may have communication connections thereto which may be end-to-end encrypted. The term "encryption" may include that multiple copies of all relevant data may be stored in servers and a blockchain so that data tampering can be avoided.

For example, if a transmission is realized between two users, the project data, project criteria and basic criteria transmitted between them may be stored in the blockchain so as to ensure that the data cannot be corrupted or the like. This ensures safety for all users using the computer system.

According to a further aspect the computer system may comprise one or more computation units, and one or more data storage units, wherein the data storage units may be configured to store one or more computer-program products which are configured to perform the functions of the platform device as described above. The computer units and data storage units may be integrated in the system server. Alternatively or additionally, the computer units and data storage units may be distributed in view of their geographical location and may be connected via a network to the computer system.

The computer system may be connected via a network to a blockchain network, wherein the data transmission between the computer system via the network to the blockchain network is encrypted so that maximum data safety of the users is ensured.

The herein described disclosure further provides a method for controlling the exchange of data between different users of a project, wherein the users may share data on a digital platform. The digital platform may comprise a platform device with a platform structure including different layers which are arranged in hierarchical order from a top layer to a bottom layer. The profiles of the users may be assigned to the different layers depending on a type of a user and user profiles representing the project may be assigned to a first layer of the platform structure. The method may comprise the following steps
- receiving project data, project criteria and basic criteria of a user having a user profile assigned to the first layer from a first terminal device,
- transmitting the received project criteria to a plurality of terminal devices,
- receiving, from a second terminal device, in response to the transmitted project criteria, a request of a user having a user profile assigned to a second layer of the profile structure to access the project data, wherein the request includes a set of project criteria and a set of basic criteria of the user,
- comparing the received sets of basic criteria and project criteria of the user assigned to the second layer with the project criteria and the basic criteria of the user assigned to the first layer,
- permitting the user assigned to the second layer to access the project data if the set of project criteria and the set of basic criteria of the user assigned to the second layer match with a set of project criteria and a set of basic criteria of the user assigned to the first layer.

According to another aspect, the method may comprise the further steps
- comparing a set of project criteria of a user assigned to the top layer with sets of project criteria of users assigned to one or more subsequent lower layers, and
   if a match is found between the set of project criteria of the user assigned to the top layer and a set of project criteria of a user assigned to the one or more subsequent lower layers,
- comparing the set of project criteria of the user assigned to the one or more subsequent lower layers with sets of user criteria of users assigned to one or more further subsequent lower layers until the bottom layer is reached, and
- comparing a set of basic criteria of a user assigned to the bottom layer with sets of basic criteria of users assigned to one or more subsequent upper layers, and
   if a match is found between the set of basic criteria of the user assigned to the bottom layer and a set of basic criteria of a user assigned to the one or more subsequent upper layers,
- comparing the set of basic criteria of the user assigned to the one or more
   subsequent upper layers with sets of basic criteria of users assigned to one or more further subsequent upper layers until the top layer is reached, and
   if users matching the project criteria are equal to users matching the basic criteria, permit access to the project data for said users.

Summarizing, the herein described subject matter provide a computer system and a method that enables users in a project to access information in an automated manner. The described standardised approach performed by the platform device allows investors to communicate expectations as well as targets and goals across different levels to ultimately reach project owners. At the same time, it enables project owners and users in lower layers to communicate expectations to upper layers resulting in the emergence of mutual alignment between users of different types needed to successfully set up and complete a green technology project. This improves the efficiency of the data exchange between different users of a digital platform lowering the cost and reducing the time to provide information and match the users in each step.

### Brief Description of Drawings

- Fig. 1: shows schematically an overview of a digital platform in which the computer system described herein may be implemented.
- Fig. 2: shows schematically the components of the computer system.
- Fig. 3: shows schematically the exchange of information between users assigned to different layers of the project structure included in the platform device.
- Fig. 4: shows schematically the platform structure with regard to the matching of the project criteria.
- Fig. 5: shows schematically the platform structure with regard to the matching of the basic criteria.
- Fig. 6: shows schematically the platform structure with regard to the provision of access to the project data.
- Fig. 7: shows an example of sharing project information between different users according to the herein described subject matter.

### Detailed Description of Exemplary Aspects

In the following, preferred aspects and examples will be described in more detail with reference to the accompanying figures. Same or similar features in different drawings and examples are referred to by similar reference numerals. It is to be understood that the detailed description below relating to various preferred aspects and preferred examples are not to be meant as limiting the scope of the present disclosure.

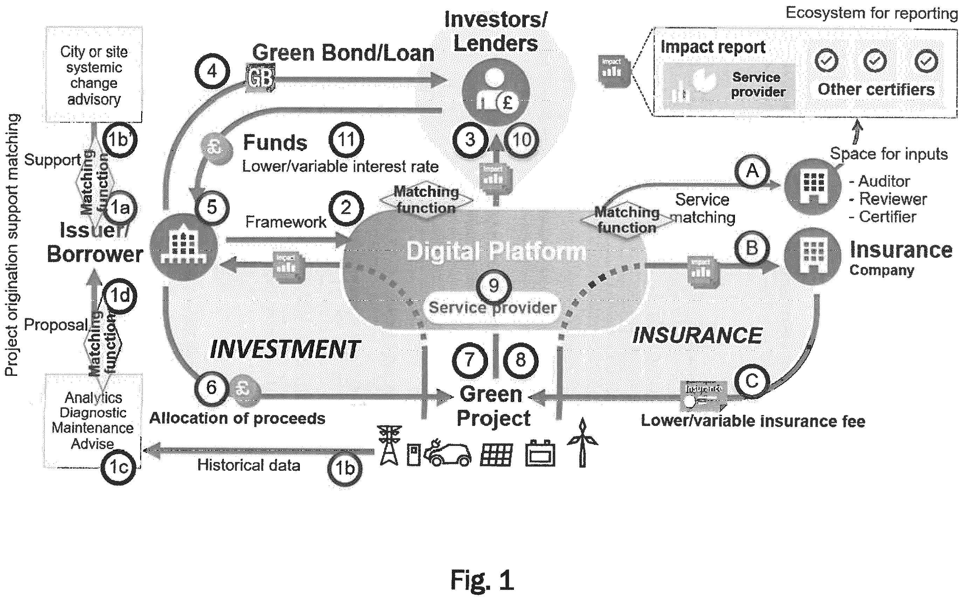

Figure 1 shows schematically an overview ("big picture") of the interactions between different users of a digital platform in which the computer system described herein may be implemented. The following describes numbered items 1a through 11 and A through C, which represent interactions among various stakeholders in a green technology project where matching of requirements is needed. At first (1a), in case of a new project, an issuer of a green loan or bond may have an idea of the desired project. In a next step (1b'), the issuer may consider projects based on city or site level systemic change advisory. If an existing project matches the expectations of the issuer (matching between 1a and 1b), historical data of an existing project, which may be based on existing assets, may be received, and analyzed by a service provider (item 1c). As a result, a project proposal may be presented to the issuer (item 1d) and alignment between the issuer's demands and the offered proposal has to be achieved (matching between 1c and 1d).

In case a matching is achieved (item 2), the issuer may submit to the digital platform the project details ("Proposal") based on the actions carried out at items 1a or 1d. Framework means including a description of the organisational strategy and the reasoning to select the project may highlight its contribution to achieve the transition goals.

At item 3, the data exchange according to the present invention may be started. The project may be made visible to the investor or lender to consider getting in touch with the issuer and begin negotiations. The issuer may get contacts from one or multiple investors or lenders interested in the project.

Outside the digital platform the lending agreement may take place, which may include a so called "Promise" regarding the use of proceeds and the outcome in terms of environmental and/or social impact in exchange of better terms. Loan/bond contract may need some level of innovation to include a new clause (item 4). Furthermore, the money transaction may take place outside the digital platform (item 5).

In a next step (item 6), use of proceeds may be allocated to the necessary internal and external parties to implement the project. Subsequently, project implementation may be carried out (item 7). Depending on the type and scale of the project, this step may take time.

After project implementation, the project may start to generate operational data of the green facilities, which may be monitored by Internet of Things (loT) devices and communicated as project data to the digital platform (item 8). Furthermore, by using blockchain, the project data may be securely stored and converted into Key Performance Indicators (KPI) (item 9). The type and complexity of the KPI may depend on the project. Based on the knowledge of the system provider KPIs and their standardisation may be implemented. The KPIs and monitored data may become visible to the investor or lender corresponding to the evidence of the issuer's compliance to the promise ("Delivery") (item 10). As a result, the investor or lender may provide better terms e.g. lower interest rate as the "Delivery" of their promise (item 11).

The items A to C are related to projects in which no loT is included, such as projects related to human rights, money laundering, ESG rating and the like. At item A, a service matching from the digital platform to a third-party auditor/reviewer/certifier may take place. In a next step (item B), similar evidence as in item 10 can be used to show to insurers the increased greening of a site e.g., a building potentially resulting in benefits such as lower insurance fees. The insurer can offer a new derivative type of insurance related to the risk exposure of item 11. For example, if the weather is bad, the expected solar energy generation is lower resulting in not "Delivering" the "Promise" potentially causing a penalty. This consideration is quite early stage. Based on the evidence, the insurer may provide benefits such as lower insurance fees (item C).

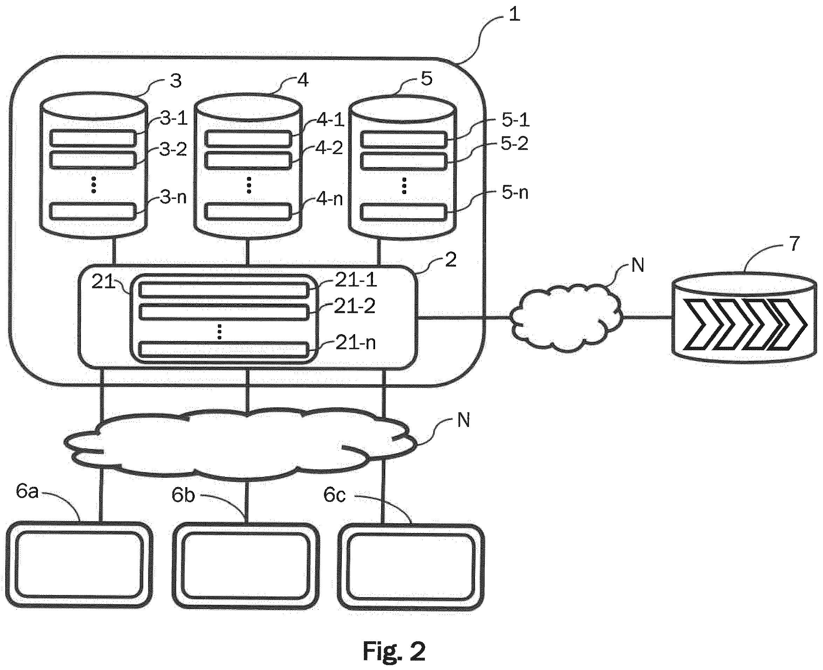

Figure 2 shows schematically the components of the computer system described herein which may be part of the the digital platform described above. For example, the computer system may comprise a system server 1 which may include a plurality of databases 3, 4, 5 and a platform device 2 exchanging data with the plurality of databases 3, 4, 5. The plurality of databases 3, 4, 5 may comprise a project database 3, a project criteria database 4 and a basic criteria database 5. It may also possible that the databases 3, 4, 5 are located on remote individual servers and in this case be connected to the system server 1 via a network (not depicted). The platform device 1 may be at least one hardware device or may be a software-based program product which may be stored in one or more data storage units (not depicted). A platform structure 21 may be integrated into the platform device 2, e.g., by software, which may comprise a plurality of layers 21-1, 21-2, 21-n. The layers 21-1, 21-2, 21-n may be arranged in hierarchical order from a top layer 21-1 to a bottom layer 21-n, wherein user profiles of different users of the digital platform may be assigned to the different layers 21-1, 21-2, 21-n depending on the type of user. For example, user profiles of project owners may be assigned to the bottom layer 21-n, user profiles of investors or lenders may be assigned to the top layer, and user profiles of other project supporters, such as external reviewers and project developers may be assigned to the layers in between.

Each of the databases 3, 4, 5 may include a data storage structure corresponding to the platform structure 21. The project database 3 may comprise the layers 3-1 to 3-n for storing entire project data of various projects as well as individual project data sets transmitted to the users after matching the respective project and basic criteria. For example, the project data of each project may be stored in the bottom layer 3-n, wherein individual sets of project data transmitted to different project supporters after matching may be stored in the upper layers 3-1, 3-2. Instead of storing complete project data sets in the upper layers, it may also be possible that the upper layers include only access data sets pointing to the respective set of project data stored in the bottom layer.

The project criteria database 4 may comprise the layers 4-1 to 4-n for storing project criteria of the different types of user. For example, the project criteria of the project owners may be stored in the bottom layer 4-n, the project criteria of the investors or lenders may be stored in the top layer 4-1, and the project criteria of the other project supporters, such as external reviewers and project developers, may be stored in the in the layers 4-1, 4-2, 4-n in between.

Accordingly, the basic criteria database 5 may comprise the layers 5-1 to 5-n for storing basic criteria of the different types of user. For example, the basic criteria of the project owners may be stored in the bottom layer 5-n, the basic criteria of the investors or lenders may be stored in the top layer 5-1, and the basic criteria of the other project supporters, such as external reviewers and project developers, may be stored in the in the layers 5-1, 5-2, 5-n in between.

The system server 1 may be connected to a plurality of terminal devices 6a, 6b, 6c which may be configured to receive input data from a user and to transmit output data to a user. The terminal devices 6a, 6b, 6c may be mobile devices, such as smartphones or tablet computers, or any other type of computer connectable to the system server. It may also be possible that the terminal devices 6a, 6b, 6c may be loT devices monitoring operational data of the green facilities and providing said operational data to the system server 1.

In the example depicted in Fig.2, the terminal devices 6a, 6b, 6c exchange data with the platform device 2 of the system server 1 via a single or multiple networks N, preferably the internet. In order to increase data security, the communication between the terminal devices and the system server may preferably be end-to-end encrypted and a verification for log in to the system server 1 may be required. Thus, the system server 1 may be connected to a blockchain network 7, in which the project data, such as the KPIs of the green facilities, as well as project and basis criteria and any other relevant data of the project may be stored.

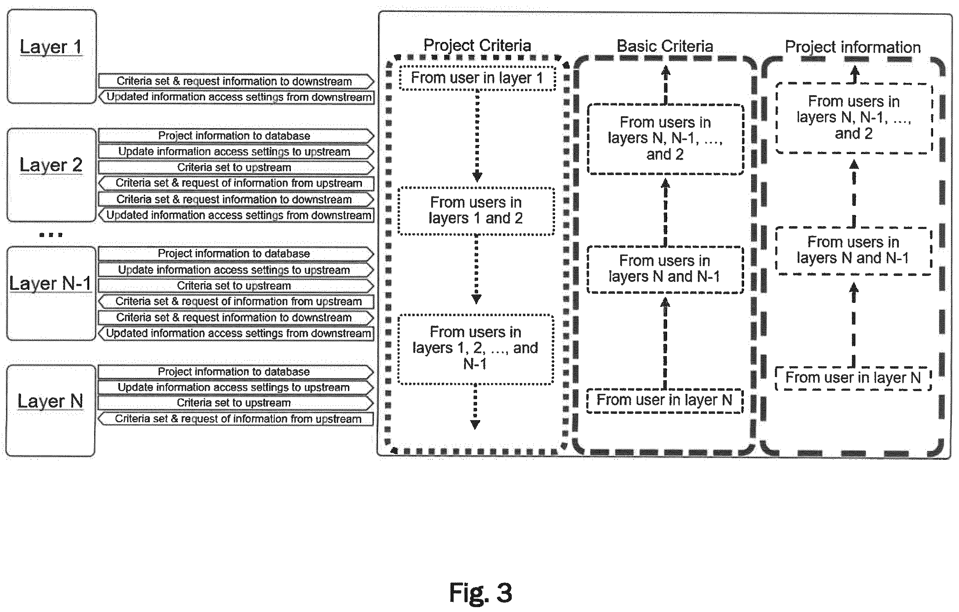

Figure 3 shows schematically the data exchange between users assigned to different layers included in the project structure of the platform device. On the right side the topdown matching of project criteria starting from users assigned to the top layer (layer 1) to users assigned to the bottom layer (layer N) and the bottom up matching of basic criteria starting from users assigned to the bottom layer (layer N) to users assigned to the top layer is shown. As a result, users who meet both criteria are allowed access to the project data and the project information is made available to the respective users. For example, user profiles of project owners may be assigned to the bottom layer (layer N), user profiles of investors or lenders may be assigned to the top layer (layer 1), and user profiles of other project supporters, such as external reviewers and project developers may be assigned to the layers in between (layer 2 to layer N-1).

On the left side the data exchange between users of different layers is described in the depicted arrows. Arrows pointing away from a layer include information which are sent by a user of that layer and arrows pointing to the layer include information received by said user.

The flow of interactions among users of different layers can begin from the top layer (lay er 1) or the bottom layer (layer N). For example, a new top layer user such as a new investor or lender may send a criteria set and a request information to a project owner ("to downstream") and the project owner may provide updated information access settings "from downstream" if the project and basic criteria provided in the criteria set of the investor match his expectations. After the top and bottom layers begin the flow of interactions, intermediate layers can begin interacting.

On the other hand, for example, a project owner assigned to layer N may provide information to the project database and may send a criteria set "to upstream", which means the project owner may provide project criteria to all users assigned to the upper layers. In response to the transmitted project criteria, the project owner may receive a criteria set and a request for information from one or more users assigned to an upper layer ("from upstream") and may update the information access settings of users assigned to upper layers ("to upstream") if they match the project criteria and the basic criteria.

The described data exchange may also be carried out between users of upper layers. For example, a new intermediate layer user such as a new external reviewer or a new project developer (e.g., assigned to layer 2 and layer N-1) may provide project information to the project database, send a criteria set "to upstream" and receive a request for information "from upstream". At the same time, the intermediate layer user may send a criteria set and a request for information "to downstream" for getting access to project data of users assigned to lower layers.

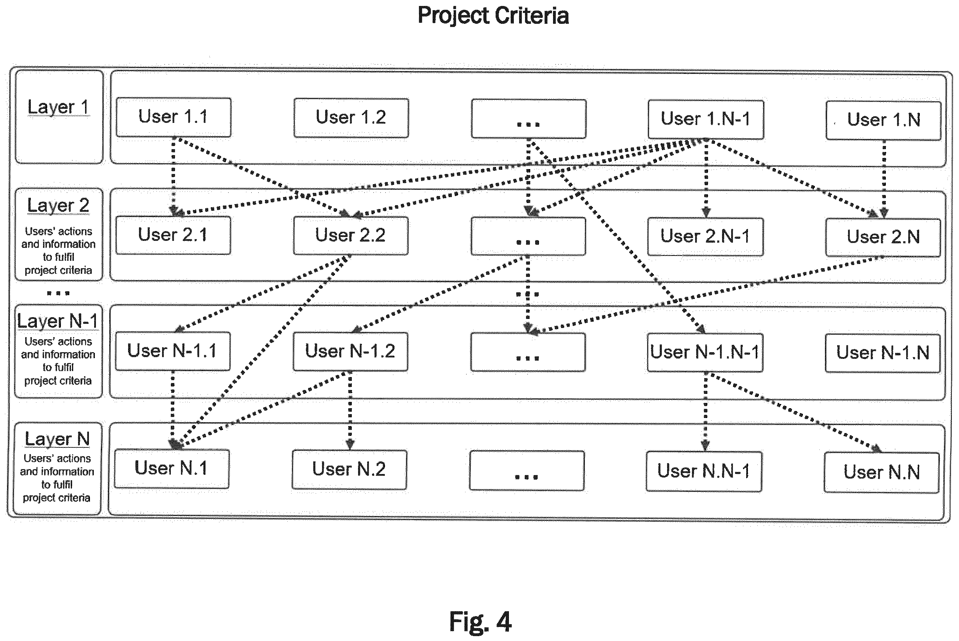

The types of data in each database may include proprietary or public data, dynamic data, static data, qualitative data, quantitative data, and the like. Furthermore, e.g., users in upper layers can carry out project aggregation from users in lower layers. For example, aggregating various single projects into a bundle of projects that can be structured into a green bond for investors. Investors may expect a large sized financial instrument, but single projects might be too small. By aggregating multiple projects, the desired size by investors can be achieved. The number of necessary layers for interaction, depends on the project and the preferences of the users. In the following Figures 4 to 6, which show interactions between users of the platform structure in terms of matching project and basic criteria and providing information, cases are shown in which users of all layers are involved but also cases in which not all types of users are required to set up a project.

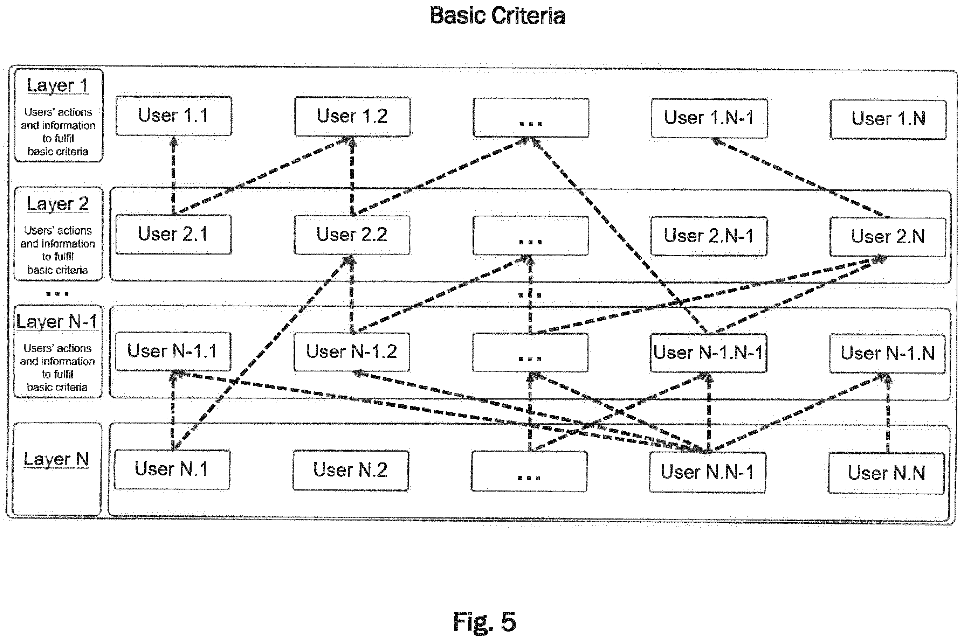

Figures 4 and 5 shows schematically the platform structure with regard to the matching of project and basic criteria. As obvious from these figures, there are multiple paths to achieve a connection between users assigned to different layers from the top layer to the bottom layer ("end-to-end connection"). For each path, the project and basic criteria of the various users, which may be stored in the project and basic criteria database, may be compared to match users of different types required to complete a green technology project. Based on both databases, for the matching and filtering purposes, ranking of users of upper and lower layers may be visible to prioritise the selection. In some cases, the end-to-end connection may not be achieved, which may represent projects that could not be funded because of misalignment between the different types of users assigned to the layers. For these cases, the respective users can make actions to fulfil missing expectation, reach alignment and ensure the end-to-end connection across layers. Recommendations about required or preferred data inputs to fulfil criteria for the users in each layer may be provided in the project and basic criteria databases resulting in dynamic guidance of the users based on dynamic criteria settings.

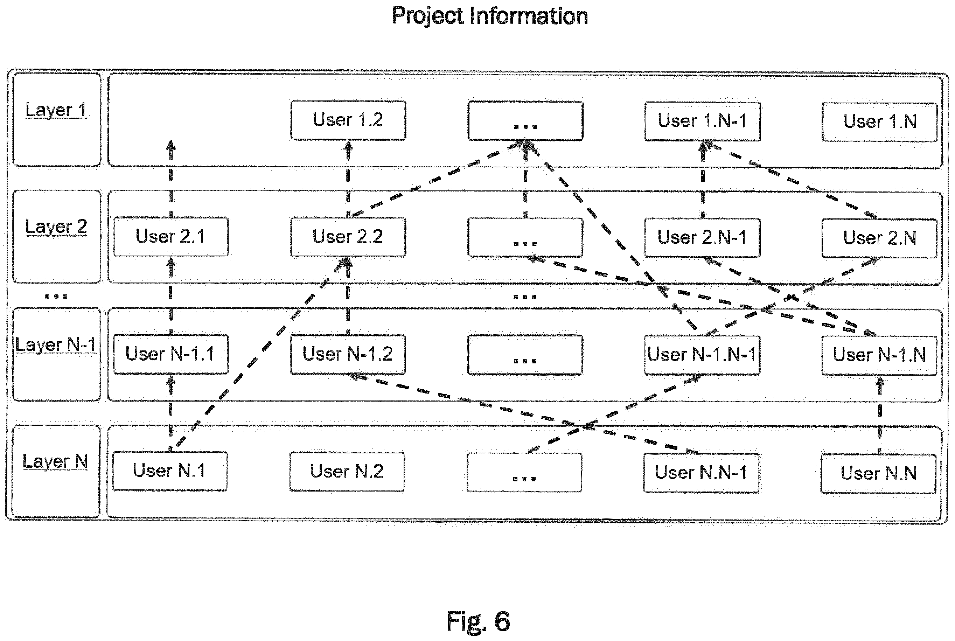

As a result of the filtering and matching of project and basic criteria, the path for sharing project information is shown in Figure 6. The cases where there is end-to-end connection in the three databases are projects that have the highest possibilities of being financed and implemented as there is fulfilment of criteria and sharing of project information. The above results in access and visibility of project information if there is matching across users in project and basic criteria.

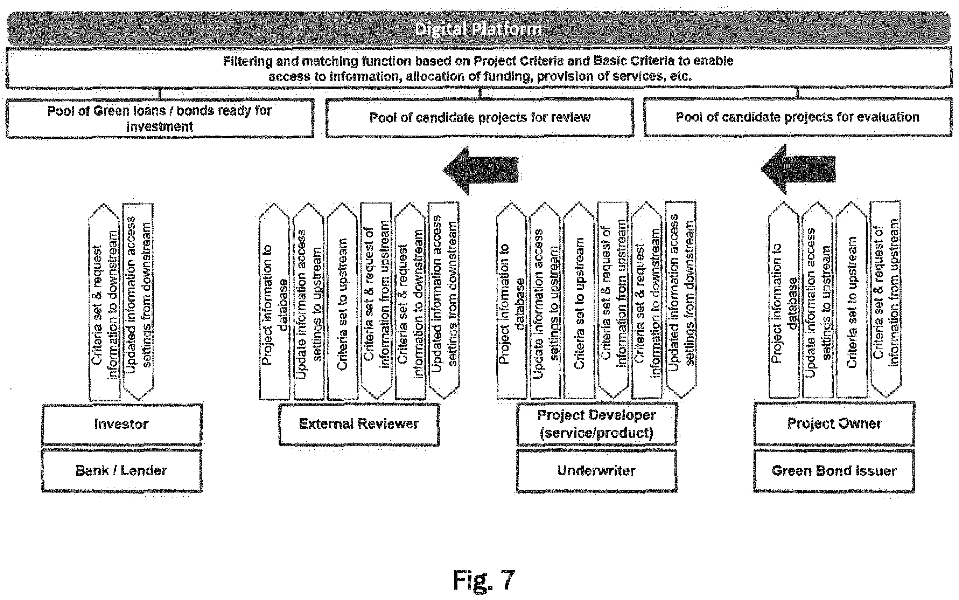

Figure 7 shows an example of access to information by concrete users of the digital platform accordingto the herein described subject matter. The bold arrows and the content of the text fields above the arrows show the development of a project information database on the path from project owner to lender or investor. The matching of project and basic criteria described earlier can be applied at different levels of the project, namely between project owners/green bond issuers and project developers/underwriters to select a promising project from a pool of candidates, between project developers/underwriters and external reviewers to review projects from a pool of candidates that are already in progress, and between external reviewers and investors/lenders regarding investment-ready green bonds/loans. This allows for providing an effective and transparent data exchange throughout the entire process from project idea to completion.

Summarizing, the herein described subject matter provide a computer system and a method that enables users in a project to access information in an automated manner. The described standardized approach performed by the platform device allows investors to communicate expectations as well as targets and goals across different levels to ultimately reach project owners. At the same time, it enables project owners and users in lower layers to communicate expectations to upper layers. From the end-to-end matching across layers, steps, and users, emerges a mutual alignment achieving clarity and transparency, which results in lower cost of capital.

As will be appreciated by one of skill in the art, the present disclosure, as described hereinabove and the accompanying figures, may be embodied as a method (e.g., a computer-implemented process or any other process), apparatus (including a device, machine, system, computer program product, and/or any other apparatus), or a combination of the foregoing.

Aspects/Examples of the present disclosure may be a software entirely (including firmware, resident software, micro-code, etc.), or a combination of software and hardware aspects that may be referred to as a "system". Furthermore, the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

The present disclosure may be described with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

The computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the disclosure.

It should be noted that terms such as "server" and "processor" may be used herein to describe devices that may be used in certain aspects of the present disclosure and should not be construed to limit the present disclosure to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternatives may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the disclosure, and should not be construed to limit the present disclosure to any particular logic flow or logic implementation. The described logic may be partitioned into different logic blocks (e.g., programs, modules, functions, or subroutines) without changing the overall results or otherwise departing from the true scope of the disclosure.

Often, logic elements may be added, modified, omitted, performed in a different order, or implemented using different logic constructs (e.g., logic gates, looping primitives, conditional logic, and other logic constructs) without changing the overall results or otherwise departing from the scope of the disclosure.

The present disclosure may be embodied in many different forms, including, but in no way limited to, a graphical processing unit as well as computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, python, C, C++, JAVA, JavaScript or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of aspects of the present disclosure may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the disclosure may be implemented as a combination of both software (e.g., a computer program product) and hardware. Still other aspects of the present disclosure are implemented as entirely hardware, or entirely software.

While certain exemplary aspects have been described and shown in the accompanying drawings, it is to be understood that such embodiments are merely illustrative of and are not restrictive on the broad disclosure, and that the aspects of the present disclosure are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described aspects and examples can be configured. Therefore, it is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously. Those skilled in the art will also appreciate, in view of this disclosure, that different aspects or examples of the disclosure described herein may be combined to form other aspects or examples of the disclosure.

### Reference sign list

- 1: system server
- 2: platform device
- 21: platform structure
- 21-1, 21-2, 21-n: layers of the platform structure
- 3: project database
- 3-1, 3-2, 3-n: layers of the project database
- 4: project criteria database
- 4-1, 4-2, 4-n: layers of the project criteria database
- 5: basic criteria database
- 5-1, 5-2, 5-n: layers of the basic criteria database
- 6a, 6b, 6c: terminal devices
- 7: blockchain network
- N: network

## Claims

1. A computer system for controlling the exchange of data between different users of a project sharing data on a digital platform, the computer system comprising a plurality of terminal devices (6a, 6b, 6c) connected to at least one system server (1) configured to receive input data from a user and to display output data to the user, the system server (1) including
a plurality of databases (3, 4, 5) comprising
at least one project database (5) configured to store project data of a plurality of projects,
at least one project criteria database (4) configured to store project criteria of a plurality of users,
at least one basic criteria database (5) configured to store basic criteria of the plurality of users, and
a platform device (2) connected to the plurality of databases (3, 4, 5) storing profiles of users in a platform structure (21), the platform structure (21) including different layers (21-1, 21-2, 21-n) which are arranged in hierarchical order from a top layer to a bottom layer, wherein the user profiles are assigned to the different layers (21-1, 21-2, 21-n) depending on a type of a user, and user profiles representing the project are assigned to a first layer (21-1, 21-2, 21-n) of the platform structure (21),
the platform device (2) configured to
- receive project data, project criteria and basic criteria of a user assigned to the first layer (21-1, 21-2, 21-n) from a first terminal device (6a, 6b, 6c),
- transmit the received project criteria to the plurality of terminal devices (6a, 6b, 6c),
- receive, from a second terminal device (6a, 6b, 6c), in response to the transmitted project criteria, a request of a user having a user profile assigned to a second layer (21-1, 21-2, 21-n) of the platform structure (21) to access the project data, wherein the request includes at least one set of project criteria and at least one set of basic criteria of the user,
- compare the received sets of basic criteria and project criteria of the user assigned to the second layer (21-1, 21-2, 21-3) with the project criteria and the basic criteria of the user assigned to the first layer (21-1, 21-2, 21-n),
- permit the user of the second layer (21-1, 21-2, 21-n) to access the project data if the set of project criteria and the set of basic criteria of the user assigned to the second layer (21-1, 21-2, 21-n) match with a set of project criteria and a set of basic criteria of the user assigned to the first layer (21-1, 21-2, 21-n).

2. The computer system according to claim 1, wherein
a set of project criteria includes a first predetermined number of user requirements directed to a project, and a set of basic criteria includes a first predetermined number of project requirements directed to a user.

3. The computer system according to claim 1 or 2, wherein
each time a request to access the project data of a user having a user profile assigned to a second layer (21-1, 21-2, 21-n) is received by the platform device (2), the platform device (2) is configured to store project criteria included in the request in the project criteria database (4) and basic criteria included in the request in the basic criteria database (5).

4. The computer system according to at least one of the preceding claims, wherein the platform device (2) is configured to
compare a set of project criteria of a user assigned to the top layer (21-1) of the platform structure (21) with sets of project criteria of users assigned to one or more subsequent lower layers (21-2, 21-n), and
if a match is found between the set of project criteria of the user assigned to the top layer (21-1) and a set of project criteria of a user assigned to the one or more subsequent lower layers (21-2, 21-n),
compare the set of project criteria of the user assigned to the one or more subsequent lower layers (21-2, 21-n) with sets of user criteria of users assigned to one or more further subsequent lower layers (21-2, 21-n) until the bottom layer is reached, and
compare a set of basic criteria of a user assigned to the bottom layer (21-n) with sets of basic criteria of users assigned to one or more subsequent upper layers (21-1, 21-2), and
if a match is found between the set of basic criteria of the user assigned to the bottom layer (21-n) and a set of basic criteria of a user assigned to the one or more subsequent upper layers (21-1, 21-2),
compare the set of basic criteria of the user assigned to the one or more subsequent upper layers (21-1, 21-2) with sets of basic criteria of users assigned to one or more further subsequent upper layers (21-1, 21-2) until the top layer is reached, and
if users matching the project criteria are equal to users matching the basic criteria, permit access to the project data for said users.

5. The computer system according to at least one of the preceding claims, wherein
the platform device (2) is configured to determine a match of two sets of project criteria if a second predetermined number of user requirements of both sets are equal, wherein the second predetermined number of user requirements is less or equal to the first predetermined number of user requirements.

6. The computer system according to at least one of the preceding claims, wherein
the platform device (2) is configured to determine a match of two sets of basic criteria if a second predetermined number of project requirements of both sets are equal, wherein the second predetermined number of project requirements is less or equal to the first predetermined number of project requirements.

7. The computer system according to at least one of the preceding claims, wherein
the platform device (2) is configured to determine a match between two sets of project criteria if a value of a third predetermined number of the user requirements included in the two sets of project criteria corresponds in a predetermined range.

8. The computer system according to at least one of the preceding claims, wherein
the platform device (2) is configured to determine a match between two sets of basic criteria if a value of a third predetermined number of the project requirements included in the two sets of project criteria corresponds in a predetermined range.

9. The computer system according to at least one of the preceding claims, wherein the platform device (2) is configured to
store a plurality of sets of project criteria of each user in the project criteria database (4) and a plurality of sets of basic criteria of each user in the basic criteria database (5),
arrange the sets of project criteria and basic criteria in the respective database in different layers (4-1 - 4-n, 5-1 - 5-n) depending on the type of the user in hierarchical order from a top layer to a bottom layer according to the platform structure (21).

10. The computer system according to at least one of the preceding claims, wherein the platform device (2) is configured to
store a plurality of sets of project data of each project in the project database (3),
arrange the sets of project data in the project database in different layers (3-1, 3-2, 3-n) according to the type of users requesting access to the project data in hierarchical order from a top layer to a bottom layer according to the platform structure (21).

11. The computer system according to at least one of the preceding claims, wherein
the platform device (2) is configured to transmit at least one predetermined set of project data to a terminal device (6a, 6b, 6c) of a user when access to the project data is permitted, wherein the predetermined set of project data corresponds to the type of the user.

12. The computer system according to claim 11, wherein
the platform device (2) is configured to transmit an updated set of the project data to the terminal device (6a, 6b, 6c) of the user when updated project data corresponding to the predetermined set of project data has been entered to the project database (3).

13. The computer system according to at least one of the preceding claims, wherein the system server (1) comprising the platform device (2) and the plurality of terminal devices (6a, 6b, 6c) are connected via a network (N) to a blockchain network (7) and wherein the data transmission between the platform device (2) and the terminal devices (6a, 6b, 6c) via the network (N) to the blockchain network (7) is encrypted.

14. The computer system according to at least one of the preceding claims, comprising:
- one or more computation units, and
- one or more data storage units, wherein the data storage units store one or more computer-program products which are configured to perform the functions of the platform device (21) according to at least one of claims 1 to 12.

15. A method for controlling the exchange of data between different users of a project sharing data on a digital platform,
wherein a platform device (2) comprises a platform structure (21) including different layers (21-1, 21-2, 21-n) which are arranged in hierarchical order from a top layer to a bottom layer, wherein profiles of the users are assigned to the different layers (21-1, 21-2, 21-n) depending on a type of a user and user profiles representing the project are assigned to a first layer (21-1, 21-2, 21-n) of the platform structure (21), the method comprising the following steps
- receiving project data, project criteria and basic criteria of a user having a user profile assigned to the first layer (21-1, 21-2, 21-n) from a first terminal device (6a, 6b, 6c),
- transmitting the received project criteria to a plurality of terminal devices (6a, 6b, 6c),
- receiving, from a second terminal device (6a, 6b, 6c), in response to the transmitted project criteria, a request of a user having a user profile assigned to a second layer (21-1, 21-2, 21-n) of the profile structure (21) to access the project data, wherein the request includes a set of project criteria and a set of basic criteria of the user,
- comparing the received sets of basic criteria and project criteria of the user assigned to the second layer (21-1, 21-2, 21-n) with the project criteria and the basic criteria of the user assigned to the first layer (21-1, 21-2, 21-n),
- permitting the user assigned to the second layer (21-1, 21-2, 21-n) to access the project data if the set of project criteria and the set of basic criteria of the user assigned to the second layer (21-1, 21-2, 21-n) match with a set of project criteria and a set of basic criteria of the user assigned to the first layer (21-1, 21-2, 21-n).

16. The method according to claim 14, comprising the further steps
- comparing a set of project criteria of a user assigned to the top layer (21-1) with sets of project criteria of users assigned to one or more subsequent lower layers (21-2, 21-n), and
if a match is found between the set of project criteria of the user assigned to the top layer (21-1) and a set of project criteria of a user assigned to the one or more subsequent lower layers (21-2, 21-n),
- comparing the set of project criteria of the user assigned to the one or more subsequent lower layers (21-2, 21-n) with sets of user criteria of users assigned to one or more further subsequent lower layers (21-2, 21-n) until the bottom layer is reached, and
- comparing a set of basic criteria of a user assigned to the bottom layer (21-n) with sets of basic criteria of users assigned to one or more subsequent upper layers (21-1, 21-2), and
if a match is found between the set of basic criteria of the user assigned to the bottom layer (21-n) and a set of basic criteria of a user assigned to the one or more subsequent upper layers (21-1, 21-2),
- comparing the set of basic criteria of the user assigned to the one or more subsequent upper layers (21-1, 21-2) with sets of basic criteria of users assigned to one or more further subsequent upper layers (21-1, 21-2) until the top layer (21-1) is reached,and
if users matching the project criteria are equal to users matching the basic criteria, permit access to the project data for said users.
